# EUROPEAN PATENT APPLICATION

(11) **EP 2 083 282 A1**
(43) Date of publication of application: **29.07.2009**
(21) Application number: 08100981.3
(22) Date of filing: 28.01.2008
(51) Int. Cl.: G01S 5/02, G01S 5/14

(54) **Transmitter-receiver system**

(71) Applicant: Technische Universiteit Delft, 2628 CN Delft (NL)
(72) Inventor: De Weerdt, Elwin, 2625 RC, Delft (NL); Van Kampen, Erik-Jan, 2023 JK, Haarlem (NL); Chu, Qi Ping, 2645 LD, Delfgauw (NL)
(74) Representative: Van Breda, Jacobus

(57) **Abstract**

The invention relates to a transmitter-receiver system comprising at least three transmitters and at least a first receiver and a second receiver, wherein the receivers are connected to a computing device that is arranged to analyse signals that said receivers receive from said transmitters and to calculate length and attitude information of an imaginary baseline connecting said receivers depending on at least carrier phase information of said signals, wherein for each combination of transmitter and receiver the computing device establishes an imaginary interval cone having as an imaginary axis a line of sight between the combination's sender and receiver, and a top coinciding with the receiver of such combination, said cone having a body representing an interval of integer values added to a phase value of the signal received by the receiver of said combination, each integer value corresponding to a multiplication factor of the signal's wavelength, said phase value added to the interval of integer values thus corresponding to an interval of possible distances between said transmitter and receiver of such combination, and wherein the computing device establishes for a predetermined selection of possible combinations of integers when the bodies of the cones intersect, and wherein upon such intersection the corresponding integers are used as a measure for the orientation and length of said baseline.

## Description

The invention relates to a transmitter-receiver system comprising at least three transmitters and at least a first receiver and a second receiver, wherein the receivers are connected to a computing device that is arranged to analyse signals that said receivers receive from said transmitters and to calculate length and attitude information of an imaginary baseline connecting said receivers depending on at least carrier phase information of said signals.

Such a transmitter-receiver system is for instance known from US 2005/0043887.

In the known method and system a normalized spectral analysis is performed before intercorrelation of demodulated signals. A phase coherence resetting of the signals is carried out before said recombination and a phase offset measurement is carried out by a true intercorrelation of the homologous satellite path base by interferometry of the two signals arising from one and the same satellite and received respectively by a pair of antennas. Subsequently, a reduction of the initial ambiguity removal search domain is performed for the determination of attitude of a vehicle by interferometric GPS-measurement and implementing a statistical test for the selection of the ambiguity.

In general, in the case of global navigation satellite systems three types of measurements are available: the code-based, carrier frequency and carrier phase measurements.

When applying code-based pseudo-range measurements, only limited accuracy is available, partly due to uncertainty and inaccuracy in the determination of the distances between transmitters and receivers.

When applying carrier phase measurements, higher accuracy is available, but ambiguities in the number of carrier wave cycles introduce uncertainties, which means there is uncertainty in respect of the determined length and attitude information.

The invention concerns a transmitter-receiver system in accordance with the preamble with higher accuracy and improved certainty as to the length and attitude of the baseline connecting the receivers as measured by making use of the carrier phase information on the signals received from the transmitters.

The transmitter-receiver system of the invention is characterized by one or more of the appended claims.

In a first aspect of the invention the transmitter-receiver system is characterized in that for each combination of transmitter and receiver the computing device establishes an imaginary interval cone having as an imaginary axis a line of sight between the combination's sender and receiver, and a top coinciding with the receiver of such combination, said cone having a body representing an interval of integer values added to a phase value of the signal received by the receiver of said combination, each integer value corresponding to a multiplication factor of the signal's wavelength, said phase value added to the interval of integer values thus corresponding to an interval of possible distances between said transmitter and receiver of such combination, and in that the computing device establishes for a predetermined selection of possible combinations of integers when the bodies of the cones intersect, and that upon such intersection the corresponding integers are used as a measure for the orientation and length of said baseline.

Preferably in this system the phase value is determined as an interval of values of the signal received by the receiver of said combination. This resolves any corrupted phase value information due to for instance noise, which might otherwise deteriorate the system's performance.

The inventors have established that the transmitter-receiver system of the invention involves accuracy in the millimeter level and that the system of the invention provides a guaranteed measurement of the distances between the concerned receivers. Thus, a highly accurate length and attitude of the baseline connecting the receivers can be calculated.

It is further beneficial that the carrier phase information of the first receiver and the second receiver is modified prior to the formation of said imaginary cones by subtracting in a first subtracting step the carrier phase information from both receivers from each other resulting in a single difference phase signal which is used as the phase signal for the formation of the imaginary interval cones.

This feature of the transmitter-receiver system of the invention provides the advantage that phase bias of the transmitted signals can be eliminated.

In a further advantageous embodiment it is preferable that the single difference phase signal originating from a first transmitter signal received by a first receiver and a second receiver is further modified by subtracting in a second subtracting step therefrom a single difference phase signal originating from a second transmitter signal received by said first receiver and said second receiver, resulting in a double difference phase signal which is used as a phase signal for the formation of the imaginary interval cones.

By thus subtracting the single difference phase measurement signal relating to a first transmitter from the single difference phase measurement signal relating to a second transmitter, the receiver clock error and phase bias of the signal at the receiver end can be eliminated, and the thus obtained double difference phase signal can advantageously be used in the formation of the measurement of the imaginary interval cones.

Further preferential features of the transmitter-receiver system of the invention are that the selection of combinations of integers corresponding to intersecting imaginary interval cones is carried out by eliminating such ranges of integers which do not relate to intersecting interval cones and that the process of eliminating ranges of integers is carried out in steps wherein each step involves partitioning of the remaining ranges, which process is only completed when a single integer solution remains.

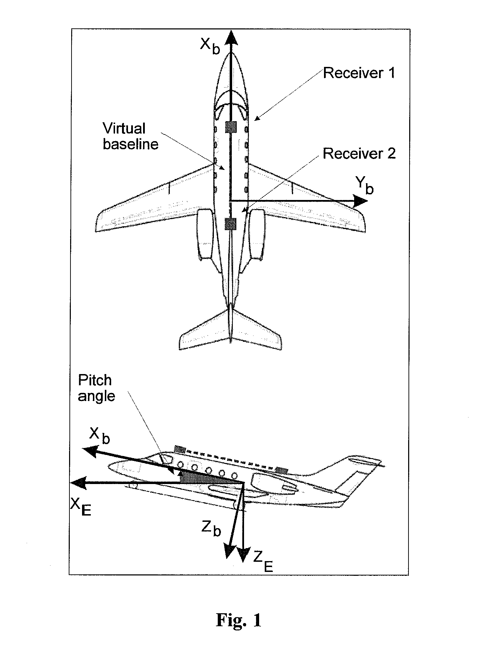

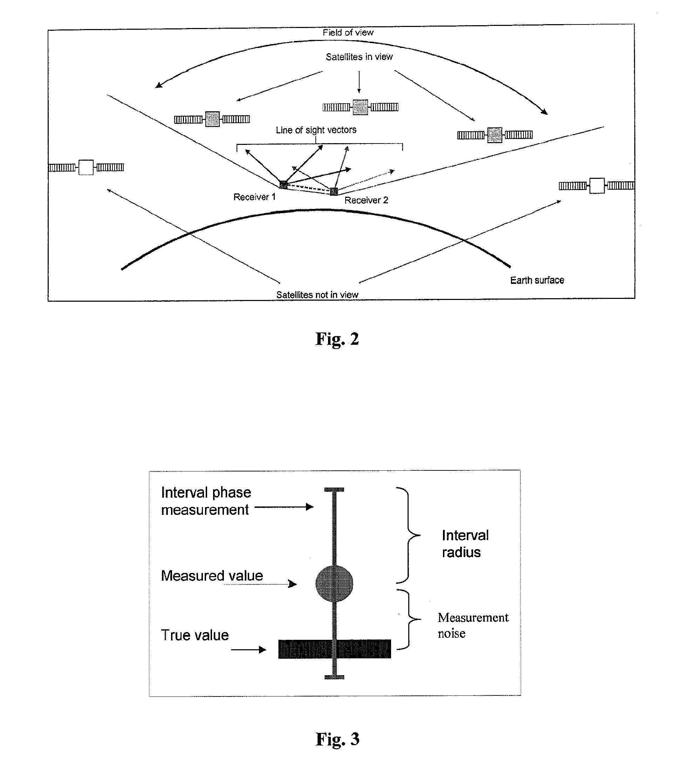

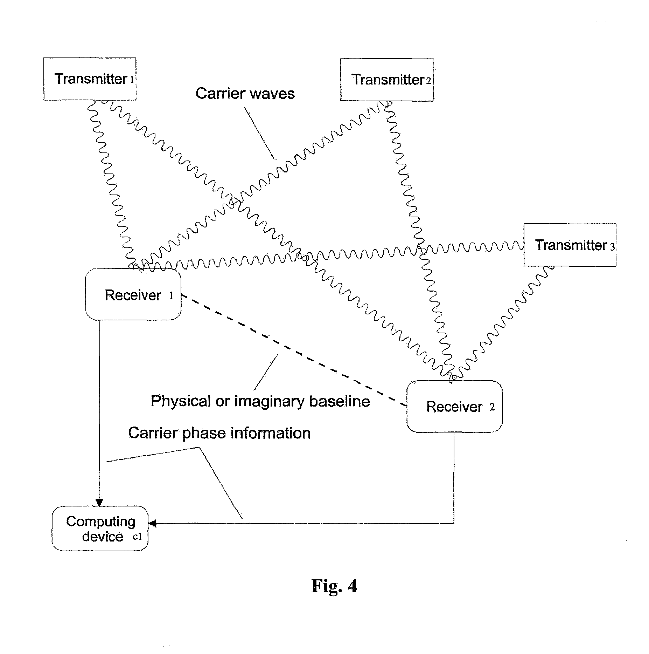

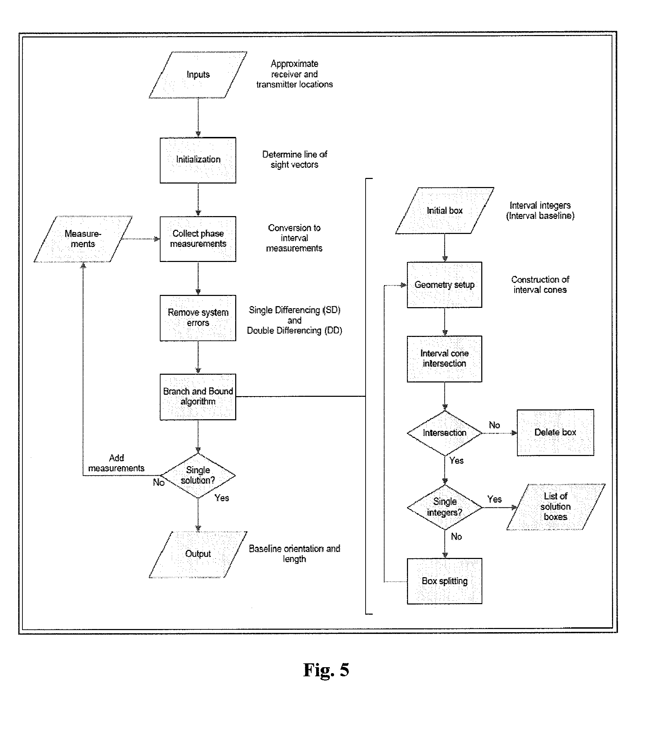

The invention shall hereinafter be further elucidated with reference to an exemplary embodiment relating to the attitude determination of an aircraft using GPS (Global Positioning System). Further reference is made to the drawing in which:
- Fig. 1 shows an aircraft provided with receivers;
- Fig. 2 shows schematically so-called line of sight vectors from the receivers to satellites in view;
- Fig. 3 provides a definition of the interval phase measurement;
- Fig. 4 shows schematically a system in accordance with the invention comprising three transmitters and two receivers, and
- Fig. 5 concerns a flow chart setting forth the attitude and length calculation pertaining to a baseline between receivers.
   With reference to Fig. 1 it is shown that a first receiver 1 and a second receiver 2 are placed along the axis of the aeroplane of which the attitude needs to be determined.
   The lower part of Fig. 1 shows as an example that the receivers 1 and 2 are placed on the fuselage which makes it possible to determine the pitch angle of the airplane. The virtual baseline between receivers 1 and 2 has a fixed length. In view of the fact that the orientation of the earth axis with respect to the GPS frame can be determined for any location on earth, it suffices to know the orientation of the virtual baseline between said receivers 1,2 in the GPS-frame, and the orientation of the virtual baseline between said receivers 1,2 in the body frame, which is determined by the positioning of the receivers on the aeroplane body, to determine the pitch angle of the aeroplane.
   The problem of establishing the pitch angle is solved following the procedure below.
- Data is transmitted from the GPS satellites and is received by the GPS receivers 1,2 (see Fig. 2).
- From the data received by the GPS receivers 1,2 it is possible to determine the approximate position of both GPS receivers (+/- 20 meters) and the approximate position of the GPS satellites in view (+/- 5 meters). The phase of the carrier wave from each satellite in view is measured by the receivers 1,2 (there can be multiple frequencies).
- The approximate positions and the phase measurements are passed from the receivers 1,2 to a computing device c1 (see Fig. 4). In the shown case of an aircraft the computing device c1 is connected to the receivers via cables. In other applications the data can also be transmitted via a wireless connection from the receivers to the computing device. The measurements are preferably taken at the same time by both receivers 1,2. The maximum allowed timing error between the signals at the receivers 1,2 depends on the system dynamics. For any system holds that the larger the timing error the less accurate the final result will be. Taking the measurements at the same time can be realized by setting the internal clocks of each receiver 1,2 exactly equal at some point in time, and scheduling the measurements per receiver 1,2 based on its internal clock. By tagging the measurements with a time label the computing device c1 can match the measurements from each receiver 1,2 even when they are received at different points in time (the location of the computing device c1 does not have to be fixed with respect to the receivers 1,2).
   The following steps are then performed by the computing device c1 (see flowchart in Fig. 5)
- From the approximate positions of the receivers 1,2 and transmitters (satellites) the line of sight vectors are determined (see figure 2). It is preferred that the uncertainty in the position of transmitters and receivers is several magnitudes less than the actual distance between the transmitters and receivers. If this condition is fulfilled than the line of sight vectors can be accurately determined. For GPS this condition is certainly fulfilled. Any remaining uncertainties on the line of sight vectors can be propagated into uncertainties on the found orientation of the baseline.
- By double differencing the phase measurements in accordance with claim 3 most system errors (atmospheric effects, time delays, etc.) are eliminated yet measurement noise on the data remains. To be sure that the correct phase value is taken into account, the computing device c1 establishes a so-called 'interval phase measurement'. The computing device c1 then establishes, for a predetermined selection of possible combinations of integers, when the bodies of the imaginary interval cones intersect. Said integers that result from the calculation are used as an accurate measure for the orientation and length of the baseline between the receivers.
   When a single integer solution remains, this solution is guaranteed to be the sought for solution.
   Interval phase measurements as mentioned in the previous paragraph, are defined as intervals containing all phase values between the upper and lower bounds of an interval. The upper bound is formed by taking the measured phase values and adding an interval radius, see figure 3. The lower bound is formed by taking the measured phase values and subtracting the same interval radius. The key aspect is that if the interval radius is set larger than the measurement noise and other system uncertainties, the true (uncorrupted) phase value lies within the interval phase measurement, and it is guaranteed to obtain the correct integer representing the intersection of the imaginary cones, and which represents a measure for the length and attitude of the baseline between the receivers 1,2.
- Subsequently a branch and bound algorithm is applied, which finds the correct integers using the phase measurements and line of sight vectors. This process is represented in the flowchart in Fig. 5.

The description of the algorithm according to Fig. 5 that determines the orientation of the baseline with high accuracy can be itemized as follows.

### Inputs:

- Approximate receiver 1,2 locations (e.g. ±20m for GPS)
- Approximate transmitter locations (e.g. ±5m for GPS).

### Initialization:

- Determine the line of sight vectors from the receivers 1,2 to all transmitters in view. The assumption is made that the uncertainty in receiver location and transmitter location is much smaller than the distance between the receivers and the transmitters, which means the error in determining the line of sight vectors can be neglected. (Certainly valid for GPS: ±20m vs. >20.000.000m)

### Collecting of measurements:

- Collect the phase measurements from both receivers 1,2 for all visible satellites and for all available frequencies at the current epoch.
- Convert the phase measurements into interval phase measurements by adding an interval number to each measurement. This interval number is called the noise band and it ensures that the correct phase measurement (i.e. the phase if there is no noise at all) lies inside the phase measurement interval.

### Removing system errors:

- For each satellite and all frequencies, compute the difference in interval phase measurements between the two receivers 1,2. This results in the Single Difference (SD) interval phase measurements. This step removes the transmitter clock errors and common atmospheric disturbances.
- Pick one of the available transmitters as a reference and subtract the SD interval phase measurements from all other transmitters from the reference to obtain the Double Difference (DD) interval phase measurements. This step removes the receiver clock errors.

### Geometry setup:

- By going from SD to DD, the geometry of the problem has shifted and the line of sight vectors corresponding to the DD-phase data now point to virtual transmitters that are created by subtracting the true transmitter positions from the reference transmitter position.
- For each virtual transmitter and each frequency construct an imaginary interval cone. All interval cones have their origin in one of the receivers (always the same one). The cone angle is an interval and is initialized based on all possible integer number of cycles and the current DD interval phase measurements. Points in the volume defined by said imaginary cone of one receiver, and described by the intersection of the interval cone and a spherical shell with inner radius equal to the minimal baseline length and outer radius equal to the maximum baseline length, are the possible locations of the other receiver.

### Interval cone intersection:

- Intersection points of regular cones are found by determining common spherical coordinates of the cones. The intersection points are described by the radius, cone angle and azimuth angle *in the reference frame of one of the cones.* Correspondingly, intersection volumes of interval cones are found by determining common spherical coordinates of the interval cones. The intersection volumes are described by the interval radius, interval cone angle and interval azimuth angle *in the reference frame of one of the cones.*
- The interval cone intersection volumes, initially computed for the combination of all possible integers, can similarly be computed for any combination of subsets of all possible integers. This procedure will be called the integer to intersection mapping.

### Branch and Bound algorithm:

- The task of this algorithm is to identify which combination of integers (one integer per transmitter) will lead to an intersection of the interval cones. The total number of integer combinations can be very large, depending on the length of the baseline and the number of transmitters. The interval branch and bound algorithm is used to efficiently remove *intervals* of integer combinations for which the integer to intersection mapping gives no intersections (i.e. more than one combination of integers can be removed at once).
- The branch and bound algorithm returns a list with integer combinations for which there is an intersection. By the inclusion property of interval analysis it can be proven that the correct integer combination, i.e. the solution obtained if there would be no noise on the phase measurements, is in the list. As soon as only one combination of integers is in the list, this value represents the sought for solution.
- When multiple combinations of integers are returned, additional phase measurements are required to eliminate all but one of the combinations. Additional phase measurements can be obtained from additional transmitters, additional frequencies or additional epochs.

### Output:

- With the correct integer number of cycles found for every transmitter in combination with the collected phase measurements, the cone angle and the length of the projection of the baseline onto the line of sight vectors can be determined with high accuracy. Because the cone angle is equal to the angle between the baseline and the line of sight vector to the transmitter, the orientation of the baseline with respect to the transmitters can thus easily be provided with high accuracy, assuming that there are at least three line of sight vectors available that span a three dimensional space.

## Claims

1. Transmitter-receiver system comprising at least three transmitters and at least a first receiver and a second receiver, wherein the receivers are connected to a computing device that is arranged to analyse signals that said receivers receive from said transmitters and to calculate length and attitude information of an imaginary baseline connecting said receivers depending on at least carrier phase information of said signals, **characterized in that** for each combination of transmitter and receiver the computing device establishes an imaginary interval cone having as an imaginary axis a line of sight between the combination's sender and receiver, and a top coinciding with the receiver of such combination, said cone having a body representing an interval of integer values added to a phase value of the signal received by the receiver of said combination, each integer value corresponding to a multiplication factor of the signal's wavelength, said phase value added to the interval of integer values thus corresponding to an interval of possible distances between said transmitter and receiver of such combination, and **in that** the computing device establishes for a predetermined selection of possible combinations of integers when the bodies of the cones intersect, and that upon such intersection the corresponding integers are used as a measure for the orientation and length of said baseline.

2. Transmitter-receiver according to claim 1, **characterized in that** the phase value is determined as an interval of values of the signal received by the receiver of said combination.

3. Transmitter-receiver system according to claim 1 of 2, **characterized in that** the carrier phase information of the first receiver and the second receiver is modified prior to the formation of said imaginary cones by subtracting in a first subtracting step the carrier phase information from both receivers from each other resulting in a single difference phase signal which is used as the phase signal for the formation of the imaginary interval cones.

4. Transmitter-receiver system according to claim 3, **characterized in that** the single difference phase signal originating from a first transmitter signal received by a first receiver and a second receiver is further modified by subtracting in a second subtracting step therefrom a single difference phase signal originating from a second transmitter signal received by said first receiver and said second receiver, resulting in a double difference phase signal which is used as a phase signal for the formation of the imaginary interval cones.

5. Transmitter-receiver system according to claim 1-4, **characterized in that** the selection of combinations of integers corresponding to intersecting imaginary interval cones is carried out by eliminating such ranges of integers which do not relate to intersecting interval cones.

6. Transmitter-receiver system according to claim 5, wherein the process of eliminating ranges of integers is carried out in steps wherein each step involves partitioning of the remaining ranges, and which process is completed when a single integer solution remains.
